# EUROPEAN PATENT APPLICATION

(11) **EP 1 544 595 A1**
(43) Date of publication of application: **22.06.2005**
(21) Application number: 03104739.2
(22) Date of filing: 17.12.2003
(51) Int. Cl.: G01N 5/02, G01N 15/08, G01N 33/34, B08B 1/00, B30B 9/02, G03D 5/06

(54) **A method and plant for measuring wiping performance of an absorbent material**

(71) Applicant: SCA Hygiene Products AB, 405 03 Göteborg (SE)
(72) Inventor: Reichling, Bernhard, 67346, SPEYER (DE); Zöller, Günther, 69198, SCHRIESHEIM (DE); Steuer, Heiko, 65452, GUSTAVSBURG (DE); von Paleske, Peter, 67271, OBERSULZEN (DE); Merten, Ursula, 67551, WORMS (DE)
(74) Representative: Hyltner, Jan-Olof

(57) **Abstract**

The present invention relates to a method and plant of measuring wiping performance of an absorbent material. According to the invention the method includes the steps of gripping a sample (2) of the material by gripping means (7) on a robot arm (6), supplying a specific amount of test material to a support surface (4) at a specific place thereon, moving the sample (2) into abutment with the support surface (4) at the place to which the test material was supplied, causing the robot arm (6) to press the sample (2) against the support surface (4) with a specific force and moving the sample in a specific wiping pattern on the support surface, moving the sample (2) away from the support surface (4), and thereafter measuring the performance of the test sample (2).

## Description

### TECHNICAL FIELD

The present invention relates to a method a plant for measuring wiping performance of an absorbent material.

### BACKGROUND OF THE INVENTION

In order to determine the performance of tissue consumer products, such as household towels, handkerchiefs or toilet papers, the physical and chemical properties, i.e. absorption capacity, absorption speed, softness, strength, etc. are measured in laboratories. However, these measurements do not reflect the real functional performance of the product when used by the consumer. For example, if the laboratory measurements shows that a defined drop of water take half a second to be sucked up and that the product can hold about 420 g of water per square meter, this measurements do not tell how many wipes of the product that is needed to remove a spoon of coffee spilled on a table. In order to determine the wiping performance of the product, consumer tests also have to be made.

Consumer tests on the other hand gives data that are a combination of the real function of the product and a perceived functionality. It is known that the visual and feel properties of the product will influence the judgement of the consumer of the functionality of the product, i.e. a product looking highly absorbent will be perceived as such, independent of functional absorbency. Moreover, consumer tests are expensive and take a long time.

The object of the present invention is to enable a measurement of the wiping performance of an absorbent material without influence from perceived functionality and in a short time. Furthermore, such a measurement should make it possible to compare the functionality of different products independent of the person initiating the measurement in a very reproducible way.

### SUMMARY OF THE INVENTION

These objects are achieved in accordance with the present invention by a method of measuring wiping performance of an absorbent material, characterised by
a) gripping a sample of the material by gripping means on a robot arm,
b) supplying a specific amount of test material to a support surface at a specific place thereon,
c) moving the sample into abutment with the support surface at the place to which the test material was supplied,
d) causing the robot arm to press the sample against the support surface with a specific force and moving the sample in a specific wiping pattern on the support surface,
e) moving the sample away from the support surface, and
f) thereafter measuring the performance of the test sample.

In a preferred embodiment the wiping movements of a human hand are simulated by using an artificial hand as gripping means.

In a variant a specific amount of test liquid is supplied to said support surface at a specific place thereon, and the sample is moved away from the support surface to a station for determining the amount of liquid absorbed by the sample. The amount of liquid absorbed by the sample is determined by measuring the increase in weight of the sample after having been moved in the specific wiping pattern.

The sample can be wholly or partly saturated with test liquid and the squeeze of a human hand can be simulated with help of the artificial hand before the step of moving the sample into abutment with the support surface at the place to which the test liquid was supplied. The test sample can be pre-wetted.

In a further embodiment, the support surface is an artificial nose.

The invention also relates to a plant for measuring wiping performance of an absorbent material, characterised by a robot arm comprising gripping means for gripping a sample of absorbent material, and means for controlling the movements of the robot arm and for performing a wiping motion of the gripping means on a support surface.

In a preferred embodiment the gripping means consists of an artificial hand and the controlling means comprises a computer being programmed to make the gripping of a sample of absorbent material and the wiping motion of the artificial hand simulate the gripping and wiping motion of a human hand.

In a first alternative the plant comprises a first station comprising a supply of samples of absorbent material to be tested, a dosing system for test liquid, a second station comprising a support surface for receiving a dose of test liquid and a third station for determining the amount of liquid absorbed by the sample, the robot arm being movable between said stations. The third station comprises preferably a balance, which is connected to the computer in such a way that measured values from the balance are stored in the computer. The computer comprises preferably a program for automatically measure the wiping performance of an absorbent material, including the dosage of test liquid on the support surface.

In a second alternative, the support surface is an artificial nose.

The invention can be used to determine the performance of tissue consumer products, such as handkerchiefs, household towels or toilet papers. The claimed method of measuring wiping performance is especially useful for dry wiping applications, whereby spilled liquid is being removed from a surface as well as for rub off applications, whereby dried impurities are being removed.

### BRIEF DESCRIPTION OF THE DRAWINGS

The invention shall now be described with reference to the enclosed figures, of which;
Fig. 1 shows a schematic plan view of a plant according to a preferred embodiment of the invention,
Figs. 2 and 3 shows typical wiping motion patterns for removing liquid from a planar surface, and

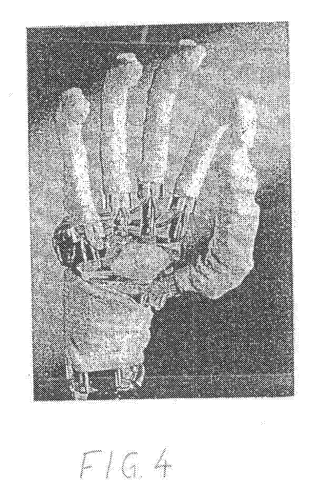

Fig. 4 discloses an artificial hand used in the plant according to figure 1.

### DESCRIPTION OF EMBODIMENTS

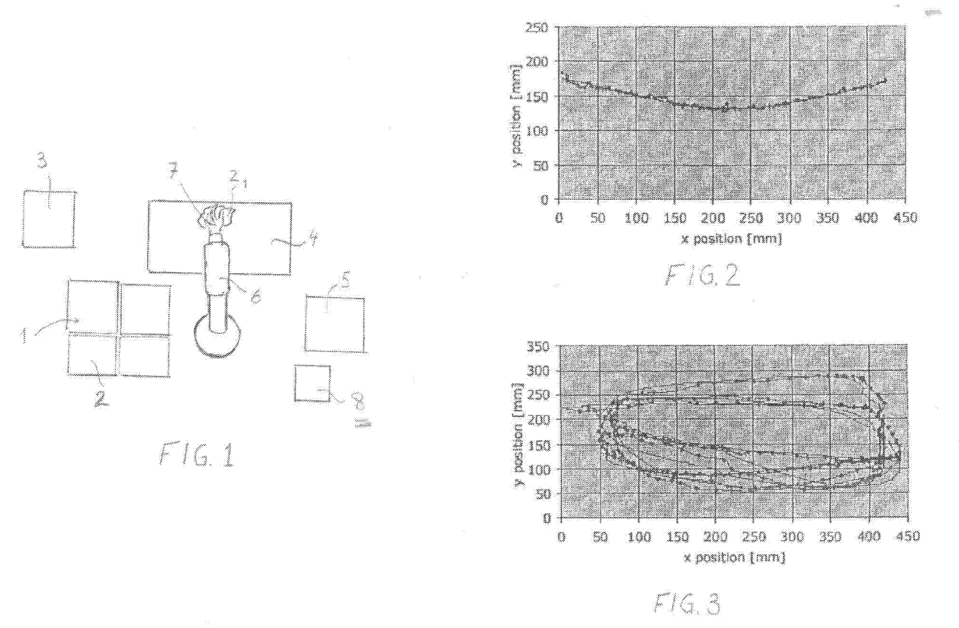

In figure 1 a preferred embodiment of a plant for measuring of wiping performance is shown in a schematic plan view. This plant comprises a supply 1 of samples 2 of absorbent material, for example household towels. In the preferred embodiment the supply consists of four marked regions, in which four samples 2 are placed before activation of the measurements. The supply can of course be constructed in other ways, for example in the form of a staple of samples and more or less than four samples can be present in the supply.

The plant also comprises a dosing system 3 for the dosage of drops of liquid onto a planar support surface 4. The dosing system can consist of a dosage pump delivering determined amounts of liquid to the planar support surface via suitable piping or a system using a pipette to draw up a determined amount of liquid from a liquid container and deliver the liquid onto the planar support surface. For example, a dosing system 765 Dosimat from Deutsche Metrohm GmbH & Co, Filderstadt, Germany can be used in the plant.

The plant furthermore comprises a balance or scale 5, for example BL 1500S from Sartorius AG, Göttingen, Germany.

According to the present invention the plant comprises a robot arm 6 having gripping means 7 for gripping a towel 2. This robot arm 6 functions to move towels 2 between the supply 1, the planar support surface 4 and the balance 5. The robot arm also functions to perform a wiping motion on the planar support surface 4 simulating the wiping motion of a consumer. In order to facilitate such a simulated wiping motion, the gripping means 7 preferably has the form of an artificial hand.

Preferably standard components 6,7 are used. For example, a robot Epson EL 653s from EPSON Deutschland GmbH, Düssledorf, Germany with a control panel OPU-320/SRC-320ABS can be used and provided with an artificial hand "FZK-Hand" from FluidMotion, Leipzig, Germany. In such a robot, the arm thereof when the robot is placed on a horizontal surface, is rotatable around two vertical axes distanced from each other in a horizontal direction. The wrist of such an arm is vertically moveable and rotatatable 120° around an axis, which per se is swingable up and down relative to the arm. Such a robot arm is thus very suitable to use when simulating the motions of a human wrist.

The robot arm 6 and the artificial hand 7 are controlled by a computer (not shown in the drawing). The computer contains program for controlling the movements of the robot arm 6 and the artificial hand 7 in wiping patterns typical for wiping motions of consumers. In figures 2 and 3 two patterns obtained by studying wiping motions of consumers are shown. Figure 2 shows the typical motion pattern when a consumer wipes a small drop of liquid from a table in a single wipe and the pattern in figure 3 relates to the wiping the typical wiping motion of a consumer wiping up a larger spill of liquid. In order to obtain these patterns 52 persons, 29 females and 23 males, were studied when performing said wiping motions. The wiping motions of each person were recorded by video and the forces during wiping were recorded. Thereafter the results were evaluated in order to establish a typical wiping pattern, an average pressure on surface during wiping, the way of holding the towel (straight, crumbled, folded), the speed of movement, finger positions and movement of wrist (turning).

Preferably, the dosing system 3 and the balance 5 are also controlled by the computer. Thereby the measured values from the balance 5 are stored in the computer and the calculations needed for determining the wiping performance of a test sample 2 can be automatically made, registered and stored without human intervention after initiating of the measuring process.

The plant can also contain a trash container 8 for used test samples.

A preferred embodiment of a method for measuring the wiping performance of a test sample 2₁ will now be described with reference to figure 1.

Firstly, the desired wiping pattern, for example the pattern shown in figure 3, is selected in the programs for measuring wiping performance stored in the computer. Other selectable parameters, such as the force or force pattern with which the test sample should be pressed against the planar support surface, the firmness of the grip on the test sample by the fingers of the artificial hand 7, the way of holding the towel (straight, crumbled, folded), the speed of movement along the different moving paths defined by the selected pattern, finger positions and movement of wrist (turning), are also selected, if not already stored in the selected program. Thereafter four samples 2 to be tested are placed in the supply 1 and a specific amount of test liquid, for example water, is delivered by the dosing system 3 onto the planar support surface 4. If the dosing system is manually controlled, the dosing system is activated manually before activation of the robot arm 6. Otherwise, the dosing system will be activated by the computer directly after activation of the program for measuring wiping performance stored in the computer. After activation of the program for measuring wiping performance stored in the computer, the robot arm 6 is moved to the supply 1 and the artificial hand picks up a sample 2₁ therefrom. The robot arm 6 then delivers this sample to the balance 5. The sample is weighed and the measured value is stored in the computer.

Thereafter, the robot arm 6 picks up the sample 2₁ and moves to the place at which liquid has been disposed on the planar support surface 4. This stage of the method is illustrated in figure 1.

The robot arm 6 is then steered to perform a wiping motion in accordance with the selected pattern and parameters. By the use of an artificial hand as gripping means, the wiping motion of a human hand can be accurately simulated.

After the selected wiping motion has been performed, the sample 2₁ is again moved to the balance 5 by the robot arm 6 and weighed. The increase in weight of the sample 2₁, which corresponds to the amount of liquid being absorbed by the sample, is then calculated by the computer.

Thereafter, the used sample 2₁ is delivered to the trash container 8.

If the result of the measurement is that all liquid disposed on the planar surface 4 has been absorbed by the sample 2₁, the computer can be programmed to automatically verify this result by testing also the three samples 2 remaining in the supply 1, under the condition that the dosage of liquid is controlled by the computer or be programmed to increase the amount of liquid for each of the remaining samples until the measurements indicate that liquid remains on the surface. If liquid remains on the surface, the remaining liquid on the planar support surface must be taken away before a new wiping performance measurement can be made. Alternatively, the planar support surface can be made so large that four different regions thereof can be used to perform the wiping motion pattern without overlap of these patterns. In such a case, the computer can be programmed to automatically test all four samples 2.

In order to admit automatic testing of all samples in the supply independent of if liquid remains on the support surface or not, means for drying the support surface, such as a wiper or a hot air device, after each measurement can also be present in the plant.

If the plant is made so that several test, a test series, can be performed automatically, the computer is preferably so programmed that different parameters, such as different wiping rates, can be set for the subsequent tests in the test series.

It is of course possible to program the computer to perform only one test at a time. In such a case, the person responsible have to see to that the planar support surface is dry before activating the computer to perform a new test.

By the described method and plant it is thus possible to measure the wiping performance of an absorbent material without influence of consumer perception and in a very short time compared to a consumer test. The wiping behaviour of a consumer can be accurately simulated by the plant, especially if the gripping means consists of an artificial hand. Moreover, since the tests in contrast to consumer tests are fully repetitive, new products can be validly compared to products on the market. The real wiping performance of a product can thus be accurately determined by the described method and plant.

The plant can also be used for determining the wiping performance of a sample being wholly or partly saturated without being able to wipe up the whole amount of liquid delivered to the planar support surface in the wiping test described above. In such a case, the computer is programmed to make the artificial hand simulate the squeezing of a human hand on the sample and to perform a second wiping test with the squeezed sample. Such test can of course also be performed directly, i.e. without a first unsuccessful wiping motion and with a pre-wetted test sample.

It is pointed out that a planar support surface is not essential for performing the inventive method as such. In the described embodiment the planar support surface is chosen because spills of liquid often occurs on tables or sink units. When the method is used for measuring the wiping performance for a material for paper handkerchiefs, the support surface should be similar to a human nose, i.e. an artificial nose should be used.

Moreover, the method and plant according to the invention can be used for other applications than to measure the absorbency of a test sample. For example, the ability of a test sample to remove a dried substance, such as a dried spot of coffee, or other substances, such as marmalade, by a rubbing motion can also be measured by the present method and plant by supplying such substances to the support surface. The method and plant can also be used to determine the ability of a test sample in dry or pre-wetted condition to remove particles, such as dust from a support surface. In such cases it might be suitable to measure the performance of test samples by determining the amount of particles or the like remaining on the support surface after the wiping motion have been performed by the robot by optical methods instead of measuring the test sample itself. The term "wiping" in the claims is intended to also encompass the term "rubbing".

The embodiments described can of course be modified in several respects within the scope of the invention. For example, if a pipette system is used for the dosing system, the robot arm can be used also for handling the pipette. Other devices for weighing the samples than the balance described can be used and also other robot arms and artificial hands. The supply for test samples can be designed for storing fewer or more than four samples. Furthermore, gripping means in the form of clamps or the like can be used instead of the artificial hand, even if this is not preferred. If the samples have a known weight, the step of weighing the samples before the wiping motion thereof can be deleted. The invention shall therefor only be restricted by the content of the enclosed patent claims.

## Claims

1. A method of measuring wiping performance of an absorbent material, **characterised by**
a) gripping a sample (2) of the material by gripping means (7) on a robot arm (6),
b) supplying a specific amount of test material to a support surface (4) at a specific place thereon,
c) moving the sample (2) into abutment with the support surface (4) at the place to which the test material was supplied,
d) causing the robot arm (6) to press the sample (2) against the support surface (4) with a specific force and moving the sample in a specific wiping pattern on the support surface,
e) moving the sample (2) away from the support surface (4), and
f) thereafter measuring the performance of the test sample (2).

2. The method according to Claim 1, **characterised by** simulating the wiping movements of a human hand by using an artificial hand (7) as gripping means.

3. The method according to Claim 1 or 2, **characterised by** supplying a specific amount of test liquid to said support surface (4) at a specific place thereon, and
moving the sample (2) away from the support surface to a station (5) for determining the amount of liquid absorbed by the sample.

4. The method according to Claim 3, **characterised by** determining the amount of liquid absorbed by the sample (2) by measuring the increase in weight of the sample after having been moved in the specific wiping pattern.

5. The method according to Claim 3 or 4, **characterised by** saturating the sample with test liquid and simulating the squeeze of a human hand with help of the artificial hand before the step of moving the sample into abutment with the support surface at the place to which the test liquid was supplied.

6. The method according to any one of Claims 1-4, **characterised by** prewetting the test sample.

7. The method according to Claim 2, **characterised by** the support surface being an artificial nose.

8. The method according to any one of Claims 1-7, **characterised in that** the absorbent material is a household towel, a handkerchief or toilet paper based on tissue paper.

9. A plant for measuring wiping performance of an absorbent material, **characterised by** a robot arm (6) comprising gripping means (7) for gripping a sample (2) of absorbent material, and means for controlling the movements of the robot arm and for performing a wiping motion of the gripping means on a support surface (4).

10. The plant according to Claim 9, **characterised in that** the gripping means consists of an artificial hand (7) and that the controlling means comprises a computer being programmed to make the gripping of a sample (2) of absorbent material and the wiping motion of the artificial hand (7) simulate the gripping and wiping motion of a human hand.

11. The plant according to Claim 9 or 10, **characterised by** comprising a first station (1) comprising a supply of samples (2) of absorbent material to be tested, a dosing system (3) for test liquid, a second station comprising a support surface (4) for receiving a dose of test liquid and a third station (5) for determining the amount of liquid absorbed by the sample (2), the robot arm (6) being movable between said stations.

12. The plant according to Claim 11, **characterised in that** the third station comprises a balance (5).

13. The plant according to Claim 12, **characterised in that** the balance (5) is connected to the computer in such a way that measured values from the balance (5) are stored in the computer.

14. The plant according to Claim 9,10,11,12 or 13, **characterised in that** the computer comprises a program for automatically measure the wiping performance of an absorbent material, including the dosage of test liquid on the support surface (4).

15. The plant according to Claim 9 or 10, **characterised in that** the support surface is an artificial nose.
